# EUROPÄISCHE PATENTSCHRIFT

(11) **EP 0 654 397 B1**
(45) Veröffentlichungstag und Bekanntmachung des Hinweises auf die Patenterteilung: **23.04.1997**
(21) Anmeldenummer: 94116944.3
(22) Anmeldetag: 26.10.1994
(51) Int. Cl.: B62D 35/00

(54) **Heckseitiger Dachbereich eines Strassenfahrzeuges mit einem Dachaufbau**
Rear roof part of a road vehicle with a roof structure
Toit arrière d'un véhicule routier avec superstructure de toit

(30) Priorität: 18.11.1993 DE 4339288
(43) Veröffentlichungstag der Anmeldung: 24.05.1995
(73) Patentinhaber: MERCEDES-BENZ AG, 70327 Stuttgart (DE)
(72) Erfinder: Kalt, Hans-Peter, Dipl.-Ing., D-71101 Schönaich (DE); Lüders, Michael, Dipl.-Ing., D-71126 Gäufelden (DE)

(56) Entgegenhaltungen:
- EP-A- 0 315 563
- DE-A- 2 109 746
- DE-A- 4 026 518
- US-A- 3 910 623
- US-A- 4 343 506
- PATENT ABSTRACTS OF JAPAN vol. 9 no. 261 (M-422) ,18.Oktober 1985 & JP-A-60 107420 (DEITAMU) 12.Juni 1985,

## Beschreibung

Die Erfindung bezieht sich auf einen heckseitigen Dachbereich eines Straßenfahrzeuges, insbesondere eines Omnibusses, nach dem Oberbegriff des Patentanspruchs 1.

Fahrzeuge mit einem vergleichsweise eckigen, kastenförmigen Aufbau, wie dies beispielsweise bei Omnibussen der Fall ist, neigen bei Fahrten auf nassen Straßen zu starker Verschmutzung der Heckpartie, so daß häufig bereits nach kurzer Fahrt keine ausreichende Durchblickmöglichkeit durch die Heckscheibe mehr gegeben ist.

Zur besseren Schmutzfreihaltung des Heckbereichs wurde daher bereits vorgeschlagen, Luftführungskanäle im heckseitigen Dach- und/oder Seitenbereich des Fahrzeugs anzuordnen, die während der Fahrt eine beschleunigte Luftströmung in Richtung Fahrzeugheck bewirken. So wird in der Offenlegungsschrift DE 21 09 746 für einen Nutzkraftwagen mit kastenförmigem Aufbau vorgeschlagen, einen ohnehin vorzusehenden Dachaufbau, z.B. eine Gepäckbrücke oder eine Kühlanlage, am heckseitigen Fahrzeugdachbereich seitlich geschlossen und dazwischen mit vertikalem Abstand zum Fahrzeugdachblech dergestalt auszubilden, daß dazwischen ein vom Fahrzeugdach zum Fahrzeugheck führender Luftleitkanal entsteht. In der Auslegeschrift DE 20 06 250 ist ein Omnibus beschrieben, bei dem durch Teile der Außenhaut des Aufbaus einerseits und einen hinteren Überrollbügel andererseits oben und/oder seitlich angeordnete, vom Dachbereich zum Heckbereich führende Luftleitkanäle gebildet sind. Es befinden sich des weiteren auch Omnibusse auf dem Markt, bei denen ein Heckspoilerelement, dessen Unterseite unter Bildung eines zwischenliegenden Luftleitkanals mit Abstand zum gekrümmten Heckabschlußbereich des Dachbleches verläuft, sowie eine seitlich geschlossene und vorderseitig offene Dachabdeckung, die bündig an das Heckspoilerelement anschließt, vorgesehen sind. Die Anordnung der Dachabdeckung vor dem Heckspoilerelement und über dem Dachblech dient der Erzielung einer Luftstauwirkung, um in diesem Bereich Luft zur Innenraumbelüftung des Omnibusses entnehmen zu können. Gleichzeitig wird durch das den heckseitigen Abschluß der Dachabdeckung bildende Heckspoilerelement ein Teil dieser Luft durch den gebildeten Luftleitkanal zum Fahrzeugheck und dort inbesondere auf die Heckscheibe geführt, um deren Schmutzfreihaltung zu unterstützen.

Bei neueren Omnibusmodellen sind häufig Dachaufbauten im heckseitigen Bereich, z.B. Dachluken oder Hutzen für eine Dachheizung, angeordnet, in denen das Dachblech merklich von seinem ansonsten weitgehend planen Verlauf abweicht, insbesondere einen stark aufgewölbten Bereich beinhaltet. Bei einem bekannten Omnibusmodell sind beispielsweise zwei aufgewölbte Hutzen für die Dachheizung angeordnet, die von einer Dachabdeckung der oben erwähnten Art überdeckt sind, an die sich als heckseitiger Abschluß das erwähnte Heckspoilerelement zur Bildung eines Luftleitkanals in Richtung Omnibusheckscheibe anschließt. Durch die Hutzen wird jedoch die Luftströmung zwischen Dachabdeckung und Dachblech erheblich gestört, so daß verglichen mit einem Modell ohne ein derartiges aufwölbendes Dachaufbauelement die Intensität der vom Dachbereich zur Heckscheibe durch den Luftleitkanal geführten Luft merklich reduziert ist.

In der Strömungstechnik ist es bekannt, die Strömung entlang einer strömungsleitenden Fläche durch Ausbildung sogenannter NACA-Einlässe zu beeinflussen, was inzwischen auch im Fahrzeugbau Anwendung findet. So ist in der Offenlegungsschrift WO 83/01421 die Anordnung von NACA-Einlässen am seitlichen Heckbereich eines Personenwagens gezeigt. Die NACA-Einlässe bilden hierbei im Querschnitt etwa U-förmige, in der Draufsicht etwa dreieckige Einbuchtungen im der Strömung ausgesetzten hinteren Seitenblechbereich. Sie dienen dort dem Zweck, die Strömung länger im Bereich der angeströmten Fläche zu halten und damit ein aerodynamisch unerwünschtes, frühzeitiges Abreißen der Strömung in den hinteren Fahrzeugseitenbereichen zu vermeiden. Des weiteren ist die Anordnung solcher Lufteinläufe zur Luftwiderstandsverringerung, z.B. in DB-Tourenwagen und früheren DB-Gruppe C Rennwagen, bekannt. In der Offenlegungsschrift DE 40 26 518 A1 ist die Ausbildung von NACA-Einlässen im seitlichen C-Säulenbereich eines Personenkraftwagens gezeigt, wobei an diese NACA-Einlässe ein die Karosserieaußenhaut in diesen hinteren, seitlichen Kantenbereichen bypassartig umgehender Luftkanal anschließt, der durch diesen C-Säuleneckbereich etwa horizontal verlaufend durchgebrochen ist. Diese Maßnahme dient dort dem Zweck, das Auftreten von ansonsten entlang dieser hinteren Seitenbereiche aufgrund ausgeprägter Druckminima im Bereich einer geneigten Fahrzeugheckfläche auftretenden Strömungswirbel zu vermeiden. Auch im Flugzeugbau finden NACA-Lufteinläufe Verwendung. So ist in dem Buch Messerschmidt-Bölkow-Blohm, 111 MBB-Flugzeuge 1913-1973, Motorbuch Verlag Stuttgart, Hrsg. Hans J. Ebert, 1973 ein Vorserien-Sportflugzeug MBB Bo 209 "Monsun" abgebildet, bei dem zentrisch hinter einem Frontpropeller unterhalb der Frontscheibe ein NACA-Lufteinlauf für die Lüftung angeordnet ist.

Der Erfindung liegt als technisches Problem die Ausbildung eines heckseitigen Dachbereiches eines Straßenfahrzeuges der eingangs genannten Art von aerodynamisch befriedigender Form zugrunde, bei dem mit geringem Aufwand eine gute Schmutzfreihaltung der Heckscheibe gewährleistet ist.

Dieses Problem wird durch einen heckseitigen Dachbereich mit den Merkmalen des Patentanspruchs 1 gelöst. Die Anordnung des wenigstens einen NACA-Einlasses in der hinteren Hälfte der Oberseite der Dachabdeckung ermöglicht das Abziehen eines Teils der über der Dachüberdeckung entlangströmenden Luft und deren Einleiten in den Luftleitkanal, zu dessen Bildung u.a. die Innenseite des Heckspoilerelements beiträgt. Durch diese spezielle Anordnung der nach vorn offenen, seitlich geschlossenen und im hinteren, oberseitigen Bereich mit einem oder mehreren NACA-Einlässen versehenen Dachabdeckung sowie des sich daran heckseitig anschließenden Heckspoilerelementes ist es trotz einem sich in diesem Bereich aufwölbenden Dachblech möglich, sowohl eine gewünschte Luftstauwirkung beispielsweise zur Gewinnung von Luft zur Innenraumbelüftung als auch eine Luftströmung vergleichsweise hoher Intensität vom Dachbereich in Richtung Fahrzeugheckscheibe sowie darüber hinaus günstige aerodynamische Eigenschaften des heckseitigen Dachbereiches zu erzielen.

Eine Weiterbildung der Erfindung nach Anspruch 2 ergibt eine besonders effektive und gleichmäßige Luftführung vom Dachbereich zum Heckscheibenbereich, indem die über die Dachabdeckung strömende Luft im wesentlichen über deren gesamte Breite abgezogen und erst hinter dem Dachaufbauelement in den Luftleitkanal eingeleitet wird, so daß diese eingeleitete Strömung nicht mehr durch das Dachaufbauelement gestört wird.

Eine vorteilhafte Ausführungsform der Erfindung ist in den Zeichnungen dargestellt und wird nachfolgend beschrieben.
- Fig. 1: zeigt eine Draufsicht auf einen heckseitigen Dachbereich eines Omnibusses und
- Fig. 2: eine Schnittansicht längs der Linie II-II der Fig. 1.

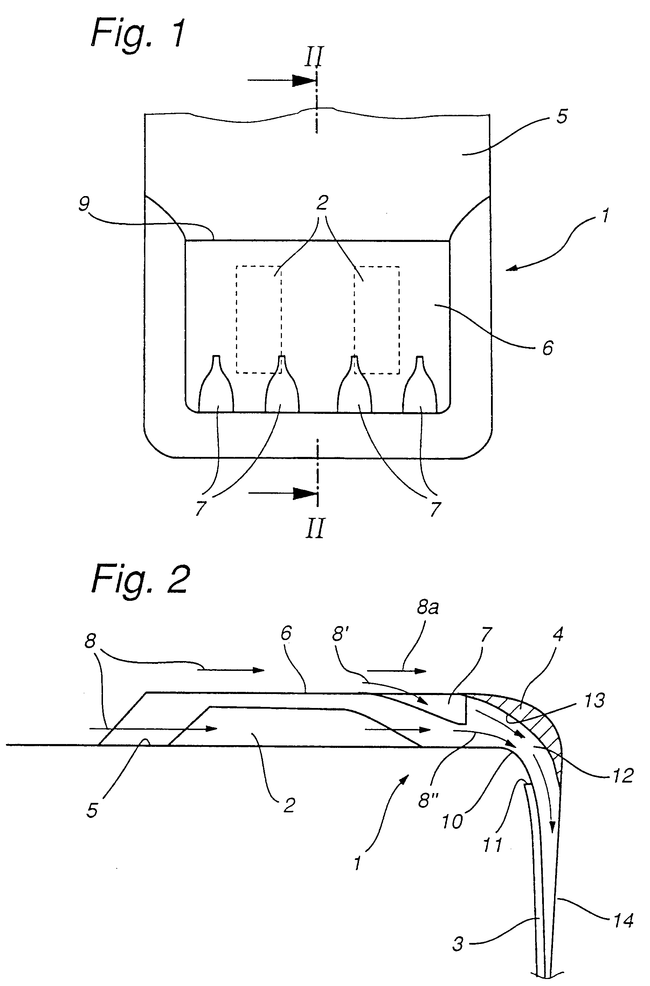

Der in den Figuren dargestellte heckseitige Dachbereich (1) eines Omnibusses beinhaltet einen hinteren Dachblechbereich (5) sowie eine im wesentlichen in einer Vertikalebene liegende Heckscheibe (3), wobei der Dachblechbereich (5) heckseitig in Form eines nach unten gebogenen Dachblechheckabschlusses (10) bis zur Oberkante (11) der Heckscheibe (3) heruntergezogen ist. Vor dem gekrümmten Heckabschluß (10) ist der hintere Dachblechbereich (5) an zwei Stellen zur Bildung zweier Dachaufbauelemente in Form von Hutzen (2) für eine Dachheizung aufgewölbt. Diese Hutzen (2) überdeckend ist über dem hinteren Dachblechbereich (5) eine Dachabdeckung (6) vorgesehen, die seitlich dicht an die Längsseiten des hinteren Dachblechbereiches (5) anschließt und zur Fahrzeugfront, d.h. in Fig. 1 nach oben und in Fig. 2 nach links, hin offen ist, so daß dort über die Breite des Omnibusses eine Lufteinströmöffnung (9) gebildet ist.

An die Hinterkante der Dachabdeckung (6) schließt mit ihrer Vorderkante ein Heckspoilerelement (4) an, das eine aus Fig. 2 hervorgehende, sichelförmige Querschnittsform aufweist. Dabei bildet die Außenseite des Heckspoilerelements (4) oberseitig einen bündigen Anschluß an die Dachabdeckung (6), von wo aus sie heckabschlußbildend nach unten gekrümmt bis etwa zur Höhe der Heckscheibenoberkante (11) verläuft, wobei sie in den Seitenbereichen heckseitig bündig an etwa vertikal verlaufende Seitenbegrenzungen (14) anschließt. Die Innenseite (13) des Heckspoilerelements (4) verläuft ebenfalls von der bündig an die Dachabdeckungshinterkante anschließenden Heckspoilerelementvorderkante unter etwas schwächerer Krümmung als die Heckspoilerelementaußenseite nach hinten unten, bis sie sich wieder mit der Außenseite unter Bildung einer etwa auf Höhe der Heckscheibenoberkante (11) liegenden Heckspoilerelementunterkante trifft. Die Heckspoilerelementinnenseite (13) verläuft auf diese Weise mit Abstand über und hinter dem Dachblechheckabschluß (10), im wesentlichen dessen Krümmung folgend. Zwischen der Heckspoilerelementinnenseite (13) und dem Dachblechheckabschluß (10) ist dadurch ein sich über die Fahrzeugbreite erstreckender Luftleitkanal (12) gebildet, der vom hinteren Ende des von der Dachabdeckung (6) umschlossenen Raums über dem hinteren Dachblechbereich (5) zum Bereich hinter der Heckscheibenoberkante (11) führt. Der von der Dachabdeckung (6) abgedeckte Raum über dem hinteren Dachblechbereich (5) bildet einen Luftstauraum, aus dem in nicht gezeigter Weise Luft zur Innenraumbelüftung des Omnibusses abgezogen wird.

Ersichtlich wird auf diese Weise ein beachtlicher Teil der Luftströmung oberhalb des Omnibusdaches von ober her in den Bereich hinter die Heckscheibe (3) geleitet, so daß dort eine beachtliche Luftströmung entsteht, die eine weitgehende Schmutzfreihaltung der Heckscheibe (3) gewährleistet. Die hohe Strömungsintensität wird trotz der durch die Hutzen (2) beeinträchtigten Luftströmung unter der Dachabdeckung (6) insbesondere durch die Anordnung der NACA-Einlässe (7) in der Dachabdeckung (6) erzielt. Die Anordnung der NACA-Einlässe (7) bewirkt eine zusätzliche Heranziehung eines Luftströmungsanteils (8') zur Anströmung der Heckscheibe (3), der ansonsten über den Omnibusdachbereich hinwegströmen würde. Dabei ergibt sich ein besonders günstiger Strömungsverlauf auch durch die Tatsache, daß die NACA-Einlässe (7) in Strömungsrichtung im wesentlichen zwischen den Hutzen (2) und dem Heckspoilerelement (4) angeordnet sind und im gezeigten Beispiel auf Höhe der Vorderkante des Heckspoilerements (4), d.h. auf Höhe der Hinterkante der Dachabdeckung (6), oder alternativ in nur geringem Abstand vor der Heckspoilerelementvorderkante enden.

Es versteht sich, daß der Fachmann naheliegende Modifikationen des beschriebenen heckseitigen Omnibusdachbereiches vornehmen kann, z.B. die Anordnung von weniger oder mehr als vier NACA-Einlässen, die gegebenenfalls auch in mehreren, in Strömungsrichtung aufeinanderfolgenden Reihen angeordnet sein können. Dabei dienen die NACA-Einlässe stets dem Zweck, zusätzliche Luft vom Bereich über der Dachabdeckung in den vom Dachbereich zum Heckbereich führenden Luftleitkanal einzuleiten, ohne die Aerodynamik des Fahrzeugs nachteilig zu beeinflußen. Durch diese Maßnahme in Verbindung mit dem Vorsehen des Heckspoilerelements sind keine Durchbrüche durch seitliche Rahmenteile erforderlich, um zusätzlich Luft an die Außenseite der Heckscheibe zu leiten.

## Patentansprüche

1. Deckseitiger Dachbereich eines Fahrzeuges, insbesondere eines Omnibusses, mit
- einem hinteren Dachblechbereich (5), der wenigstens ein Dachaufbauelement (2) und einen gekrümmten, an die Oberkante (11) einer Heckscheibe (3) anschließenden Heckabschluß (10) beinhaltet,
- einem Heckspoilerelement (4), dessen Innenseite (13) unter Bildung eines zwischenliegenden Luftleitkanals (12) mit Abstand über und hinter dem gekrümmten Dachblechheckabschluß verläuft, und
- einer den hinteren Dachblechbereich mit dem wenigstens einen Dachaufbauelement überdeckenden, seitlich geschlossen und nach vorne offen ausgebildeten Dachabdeckung (6), an die heckseitig das Heckspoilerelement in wesentlichen oberseitig bündig anschließt,
**dadurch gekennzeichnet, daß**
- in der hinteren Hälfte der Oberseite der Dachabdeckung (6) wenigstens ein NACA-Einlaß (7) angeordnet ist, der heckseitig mit höchstens geringem Abstand vor der Vorderkante des Heckspoilerelementes (4) endet.

2. Heckseitiger Fahrzeugdachbereich nach Anspruch 1, weiter **dadurch gekennzeichnet, daß**
- mehrere NACA-Einlässe (7) in einer quer zur Fahrzeuglängsrichtung verlaufenden Reihe in im wesentlichen gleichem Abstand nebeneinanderliegend und heckseitig mit höchstens geringem Abstand vor der Vorderkante des Heckspoilerelementes (4) endend an der Oberseite der Dachabdeckung (6) angeordnet sind.

## Claims

1. Roof area over the rear of a vehicle, particularly of a bus, with
- a rear roof plate area (5) comprising at least one roof superstructure element (2) and a curved rear end member (10) adjacent the top edge (11) of a rear window (3),
- a rear spoiler element (4), the inside of which (13) extends above and behind the curved rear roof end plate, forming an air duct (12) between the two, and
- a roof covering (6) constructed to be open at the front and closed at the sides which covers the rear roof plate area with the at least one roof superstructure element with which, at the rear, the rear spoiler element is substantially flush at its top,
characterised in that
- in the rear half of the top of the roof covering (6) there is at least one NACA inlet (7) which t the rear ends with at most a minimal distance in front of the front edge of the rear spoiler element (4).

2. A rear roof area of a vehicle in accordance with claim 1, further characterised in that
- a plurality of NACA inlets (7) are arranged in a row extending crosswise to the longitudinal direction of the vehicle and are situated beside one another at substantially equal intervals while at the rear they are situated at not more than a very small distance in front of the front edge of the rear spoiler element (4) and end at the top of the roof covering (6).

## Revendications

1. Partie arrière de toit d'un véhicule, notamment d'un autobus, comportant
- une zone arrière de toit en tôle (5), qui comprend au moins un élément de superstructure de toit (2) et une partie terminale arrière cintrée (10), qui se raccorde au bord supérieur (11) d'une vitre arrière,
- un élément de spoiler arrière (4), dont la face intérieure (13) s'étend, à distance, au-dessus et en arrière de la partie terminale cintrée arrière de toit en tôle en formant un conduit intercalaire (12) de guidage de l'air, et
- un revêtement de toit (6) qui recouvre la zone arrière de toit en tôle équipée du au moins un élément de superstructure de toit, est fermé latéralement et est ouvert vers l'avant et auquel se raccorde sur l'arrière, essentiellement de niveau avec sa face supérieure, l'élément de spoiler arrière,
caractérisé en ce que
dans la moitié arrière de la face supérieure du revêtement de toit (6) est disposée au moins une entrée NACA (7) qui se termine sur le côté arrière, tout au plus à une faible distance devant le bord avant de l'élément formant spoiler arrière (4).

2. Partie arrière de toit de véhicule selon la revendication 1, caractérisée en outre en ce que
- plusieurs entrées NACA (7) sont disposées côte-à-côte, au niveau de la face supérieure du revêtement de toit (6) en étant séparées par des distances essentiellement identiques, en une rangée qui s'étend transversalement par rapport à la direction longitudinale du véhicule, et se terminant, sur le côté arrière, tout au plus à une faible distance devant le bord avant de l'élément formant spoiler arrière (4).
